# EUROPÄISCHE PATENTSCHRIFT

(11) **EP 2 021 743 B1**
(45) Veröffentlichungstag und Bekanntmachung des Hinweises auf die Patenterteilung: **29.12.2010**
(21) Anmeldenummer: 07729361.1
(22) Anmeldetag: 22.05.2007
(51) Int. Cl.: G01D 11/24, F16J 15/32

(54) **FORMDICHTUNG, DICHTUNGSANORDNUNG UND PROZESSSENSOR MIT EINER SOLCHEN DICHTUNGSANORDNUNG**
FORM SEAL, SEAL ARRANGEMENT AND PROCESS SENSOR WITH SUCH A SEALING ARRANGEMENT
JOINT D'ÉTANCHÉITÉ MOULÉ ET CAPTEUR DE PROCESSUS COMPRENANT UN TEL AGENCEMENT DE JOINT

(30) Priorität: 24.05.2006 DE 102006024905
(43) Veröffentlichungstag der Anmeldung: 11.02.2009
(73) Patentinhaber: Endress+Hauser Conducta Gesellschaft für Mess- und Regeltechnik mbH & Co. KG, 70839 Gerlingen (DE)
(72) Erfinder: PECHSTEIN, Torsten, 01445 Radebeul (DE); SCHOLZ, Robert, 04720 Lüttewitz/Döbeln (DE)
(74) Vertreter: Andres, Angelika Maria
(86) Internationale Anmeldenummer: PCT/EP2007/054919
(87) Internationale Veröffentlichungsnummer: WO 2007/135143

(56) Entgegenhaltungen:
- EP-A2- 1 281 958
- DE-A1- 2 027 334
- DE-A1-102004 018 354
- US-A- 5 472 216

## Beschreibung

Die vorliegende Erfindung betrifft einen Prozesssensor mit einer Dichtungsanordnung, wie z.B. aus EP1281958 bekannt. Verschiedene Prozesssensoren umfassen zumindest abschnittsweise zylindrische, koaxial angeordnete, äußere und innere Bauteile zwischen denen ein Ringspalt bzw. eine Ringkammer von einem medienführenden Raum abzudichten ist. Im einfachsten Fall kann der Ringspalt mit einem Dichtring, geschlossen werden, der zwischen den zylinderförmigen Bauteilen radial eingespannt ist. Die Breite des Ringspalts jedoch einen gewisses Maß übersteigt, ist der Einsatz eines O-Rings nicht mehr praktikabel, stattdessen kann dann Beispielsweise ein formsteifer Dichtungsträgerkörper zwischen dem inneren und dem äußeren Bauteil angeordnet sein, wobei der Dichtungsträgerkörper einen inneren Dichtungssitz und einen äußeren Dichtungssitz aufweist, wobei in den Dichtungssitzen jeweils ein Dichtring angeordnet ist, der den Dichtungsträgerkörper jeweils zum äußeren bzw. inneren Bauteil abdichtet. Eine derartige Dichtungsanordnung kommt beispielsweise bei einem Leitfähigkeitssensor zur Anwendung, der Bezeichnung CLS16 von der Anmelderin hergestellt und vernarktet wird. Wenngleich diese Dichtungsanordnung grundsätzlich ihren Zweck erfüllt, so weist sie doch Grenzen auf, denn erstens ist die Integrität von vier umlaufenden Dichtnähten hinsichtlich Dichtungsfunktion zu gewährleisten, zweitens ist Spaltbildung entlang dieser vier Dichtnähte zu vermeiden, drittens ist dafür Sorge zu tragen, dass die Dichtringe auch bei medienseitigem Unterdruck nicht aus dem Dichtungssitz herausgezogen werden und somit zur Leckage führen, und viertens muss das Material des Dichtungsträgerkörpers mit dem Prozessmedium kompatibel sein. Diese Randbedingungen führen im Ergebnis zu aufwändigen Konstruktionen bzw. Montageschritten. Es ist daher die Aufgabe der Erfindung eine verbesserte Dichtungsanordnung und eine Formdichtung für eine solche

Dichtungsanordnung bereitzustellen. Die Aufgabe wird erfindungsgemäß gelöst durch den Prozesssensor gemäß des unabhängigen Patentanspruchs 1.

Die Formdichtung beruht auf dem Gedanken, dass zur prozessseitigen Abdichtung von Ringspalten die Anzahl der Dichtflächen auf ein Minimum reduziert, und andererseits der Dichtungsträgerkörper mittels der Formdichtung vom Prozessmedium getrennt wird. Schließlich kann die Dichtung auf besondere Prozessbedingungen, wie z.B. Unterdruck hin optimiert werden. Die Nachteile des Standes der Technik werden damit behoben.

Die Formdichtung zur Abdichtung eines Ringspalts zwischen einer äußeren umlaufenden Wand und einer inneren umlaufenden Wand gegen ein Medium umfasst:
einen elastischen, radial einzuspannenden, ringförmigen Dichtungskörper mit einer ringförmigen, äußeren radialen Dichtfläche zur Anlage an der äußeren umlaufenden Wand,
einer ringförmigen, inneren radialen Dichtfläche zur Anlage an der inneren umlaufenden Wand,
einer ringförmigen, medienseitigen Deckfläche, welche sich zwischen der äußeren radialen Dichtfläche und der inneren radialen Dichtfläche erstreckt, einer ringförmigen Basisfläche, welche sich auf der der Deckfläche abgewandten Seite zwischen der äußeren Dichtfläche und der inneren Dichtfläche erstreckt, und
mindestens einer ringförmigen Aussparung in der Basisfläche zur Aufnahme eines Verankerungsrings, wobei die Aussparung mindestens einen Hinterschnitt aufweist.

Der Dichtungskörper weist im nicht montierten Zustand in Gleichgewichtslage, also ohne Einfluss äußerer Kräfte, vorzugsweise einen Querschnitt mit näherungsweise etwa rechteckiger äußerer Kontur auf.

Die Höhe der Querschnittskontur beträgt beispielsweise nicht weniger als 40% vorzugsweise nicht weniger als 55% und weiter bevorzugt nicht weniger als 60% der Breite der Querschnittskontur, wobei die Höhe in axialer Richtung der ringförmigen Formdichtung verläuft und die Breite in radialer Richtung.

Die Höhe der Querschnittskontur beträgt weiterhin beispielsweise nicht mehr als 100% vorzugsweise nicht mehr als 85% und weiter bevorzugt nicht mehr als 70% der Breite der Querschnittskontur.

Die mindestens eine Aussparung ist in einer Ausgestaltung der Erfindung im Querschnitt in erster Nährung symmetrisch zum Dichtungskörper angeordnet. Die Aussparung weist im Querschnitt in radialer Richtung beispielsweise eine maximale Breite von nicht mehr als 70%, vorzugsweise nicht mehr als 60% und weiter bevorzugt nicht mehr als 54% der Breite der Querschnittskontur des Dichtungskörpers auf.

Die Aussparung weist im Querschnitt in radialer Richtung beispielsweise eine maximale Breite von nicht weniger als 38%, vorzugsweise nicht weniger als 45% und weiter bevorzugt nicht weniger als 48% der Breite der Querschnittskontur des Dichtungskörpers auf.

Zur Ausbildung eines Hinterschnitts weist die Aussparung zwischen dem Abschnitt maximaler Breite im Inneren des Dichtungskörpers und der Basisfläche einen Abschnitt minimaler Breite auf.

Die minimale Breite beträgt beispielsweise nicht mehr als 45%, vorzugsweise nicht mehr als 38% und weiter bevorzugt nicht mehr als 33% der Breite der Querschnittskontur des Dichtungskörpers.

Die minimale Breite beträgt weiterhin beispielsweise nicht weniger als 20%, vorzugsweise nicht weniger als 25% und weiter bevorzugt nicht weniger als 28% der Breite der Querschnittskontur des Dichtungskörpers.

Zur Verminderung von Spannungen, insbesondere Kerbspannungen sind die Konturen der Aussparung im Querschnitt gerundet. Konkave Oberflächen des Dichtungskörpers innerhalb der Aussparung weisen einen minimalen Krümmungsradius von beispielsweise nicht weniger als 5% und vorzugsweise nicht weniger als 8% der Breite der Querschnittkontur des Dichtungskörpers auf.

Konvexe Oberflächen des Dichtungskörpers innerhalb der Aussparung weisen einen minimalen Krümmungsradius von beispielsweise nicht weniger als 10% und vorzugsweise nicht weniger als 15% der Breite der Querschnittkontur des Dichtungskörpers auf.

Die Höhe der Aussparung gemessen senkrecht zur Basisfläche beträgt beispielsweise etwa 50% bis 80%, vorzugsweise etwa 60% bis 68% der Höhe der Querschnittkontur des Dichtungskörpers.

Im Innem der Aussparung weist die Oberfläche des Dichtungskörpers einen konkaven Bereich auf, der zur Öffnung in der Basisfläche hin in einen konvexen Bereich übergeht. Im Querschnitt ist dieser Übergang durch einen Wendepunkt oder durch einen Abschnitt mit konstanter Steigung gegeben. Die konstante Steigung bzw. die Steigung am Wendepunkt beträgt beispielsweise nicht weniger als 30° vorzugsweise nicht weniger als 38° und weiter bevorzugt nicht weniger als 42°.

Die konstante Steigung bzw. die Steigung am Wendepunkt beträgt beispielsweise nicht mehr als 60° vorzugsweise nicht mehr als 52° und weiter bevorzugt nicht mehr als 48°.

Die äußere radiale Dichtfläche verläuft vorzugsweise parallel zur, inneren radialen Dichtfläche, wenn die Formdichtung auf einem Verankerungsring montiert und bestimmungsgemäß in einem Ringspalt radial eingespannt ist. Der Dichtungskörper weist vorzugsweise ein Elastomer, insbesondere ein Perfluor-Elastomer, beispielsweise EPDM oder Kalrez auf.

Die Dichtungsanordnung umfasst eine Formdichtung sowie einen Dichtungsträgerkörper mit einem ringförmigen Basisabschnitt und einem Verankerungsring der an einer Stimfläche des Basisabschnitts angeordnet ist. Der Verankerungsring ist passend zur Aussparung dimensioniert, so dass die Formdichtung die bestimmungsgemäße Dichtwirkung erzielt, wenn der Dichtungskörper mit der Aufnahme auf dem Verankerungsring montiert und radial eingespannt ist.

Der Verankerungsring kann beispielsweise eine pilzförmigen bzw. pollerförmigen Querschnitt aufweisen, mit dem er formschlüssig in die Hinterschnitte der Aufnahme des Dichtungskörpers eingreift.

Der Verankerungsring kann so bemessen sein, dass der Querschnitt des Dichtungskörpers aufgeweitet wird, wenn die Aussparung um den Verankerungsring angeordnet ist. Wenn dann die Formdichtung Bestimmungsgemäß zwischen einer äußeren Wand und einer inneren Wand radial eingespannt ist, führt dies im Ergebnis zu einer radialen Verpressung und Verformung die sowohl von dem Verankerungsring als auch von der inneren Wand bzw. äußeren Wand auf den Dichtungskörper einwirkt.

Die radiale Verpressung beträgt beispielsweise etwa 10% bis 25%.

Um eine optimale Dichtwirkung für Überdruck- und Unterdruckanwendungen zu ermöglichen, kann beispielsweise die Höhe des Verankerungsrings, gemessen von der Stimfläche des Basisabschnitts des Dichtungsträgerkörpers, größer sein als die Höhe der Aussparung, so dass die Basisfläche des Dichtungskörpers im Gleichgewichtsfall nicht auf der Stimfläche des Basisabschnitts des Dichtungsträgerkörpers aufsetzt.

Der Verankerungsring kann beispielsweise eine pilzförmigen bzw. pollerförmigen Querschnitt aufweisen, mit dem er formschlüssig in die Hinterschnitte der Aufnahme des Dichtungskörpers eingreift.

Der Dichtungsträgerkörper weist vorzugsweise ein formsteifes Material auf, beispielsweise ein Metall, eine Keramik, oder einen Kunststoff, der ggf. glasfaserverstärkt sein kann. Sofern isolierende Werkstoffe gewünscht sind, wird derzeit PEEK bevorzugt.

Um eine übermäßige Relativbewegung zwischen der Formdichtung und den anliegenden Dichtflächen einer inneren Wand bzw. einer äußeren Wand zu vermindern bzw. zu eliminieren, kann der Dichtungsträgerkörper mit einer der Wände oder beiden Wänden fest verbunden sein.

In einer Ausgestaltung umfasst der Dichtungsträgerkörper im Basisabschnitt ein Innengewinde, in welches nach der Montage der Formdichtung auf dem Verankerungsring ein Außengewinde auf der Mantelfläche eines inneren, zumindest abschnittsweise zylindrischen

Körpers geschraubt wird, wobei ein zylindrischer Mantelflächenabschnitt die innere Wand des abzudichtenden Ringspalts bildet, und wobei die Formdichtung durch die innere Wand zumindest anteilig radial verpresst wird. Die Anordnung, mit der auf dem Dichtungsträgerkörper montierten Formdichtung und dem eingeschraubten inneren, zumindest abschnittsweise zylindrischen Körper wird dann in einen äußeren, zumindest abschnittsweise zylindrischen Körper eingebracht, wobei zumindest ein zylindrischer Mantelflächenabschnitt die äußere Wand des abzudichtenden Ringspalts bildet. In dem äußeren zumindest abschnittsweise zylindrischen Körper kann ein Wandabschnitt konisch gestaltet sein, wodurch die äußere radiale Verpressung der Formdichtung durch die äußere Wand kontrolliert erzielt werden kann, wenn die auf der Baugruppe montierte Formdichtung durch den konischen Abschnitt bewegt wird. Der endgültige Dichtungssitz sollte jedoch vorzugsweise eine zylindrische Außenwand aufweisen.

Die Dichtungsanordnung ist insbesondere für Sensoren der Prozessmesstechnik geeignet, beispielsweise für Leitfähigkeitssensoren, bei denen eine erste metallische Elektrode die innere Wand einer Ringkammer bildet und eine zweite, koaxial angeordnete Elektrode die äußere Wand der Ringkammer bildet. Durch die Dichtungsanordnung werden die beiden Elektroden voneinander elektrisch isoliert und zueinander zentriert, und die Ringkammer, in die das zu messende Medium eindringen kann, wird auf einen definierten axialen Endabschnitt außerhalb der Dichtungsanordnung begrenzt. Die innere und die äußere radiale Dichtfläche liegen vorzugsweise spaltfrei an der Innenwand und der Außenwand der Ringkammer an, die zwischen der Innenwand und der Außenwand gebildet ist und axial durch die Formdichtung begrenzt ist. Die Deckfläche verläuft vorzugsweise im wesentlichen planar oder allenfalls leicht gekrümmt, um die Entstehung von medienberührenden Toträumen im Randbereich zu vermeiden. Im Ergebnis kann eine solche Dichtungsanordnung die Bedingungen für Hygieneanwendungen erfüllen.

Es zeigt
Fig. 1: einen Längsschnitt durch einen Sensorkopf eines erfindungsgemäßen Leitfähigkeitssensors mit einer Dichtungsanordnung; sowie
Fig. 2: eine Serie von Ergebnissen von FEM-Simulationen, welche die Spannungen in radialen Querschnitten der Formdichtung in verschiedenen Situationen zeigt, nämlich:
   2a: von einem unmontierten Dichtungskörper ohne externe Kräfte;
   2b: von einem auf dem Dichtungsträgerkörper montierten Dichtungskörper;
   2c: von einem auf dem Dichtungsträgerkörper montierten und im Ringspalt angeordneten Dichtungskörper bei Raumtemperatur und Normaldruck;
   2d: von einem auf dem Dichtungsträgerkörper montierten und im Ringspalt angeordneten Dichtungskörper bei Raumtemperatur und medienseitigen Unterdruckvon 500 mbar absolut; und
   2e: von einem auf dem Dichtungsträgerkörper montierten und im Ringspalt angeordneten Dichtungskörper bei 150°C und medienseitigen Überdruck von 10 bar.

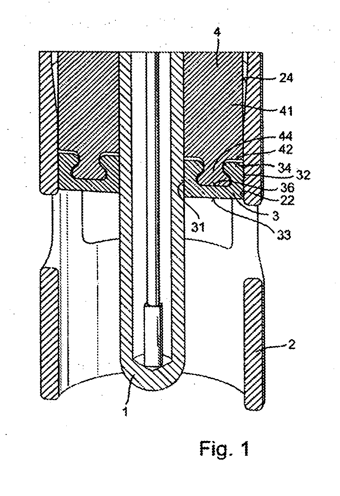

Der in Fig. 1 dargestellte Leitfähigkeitssensor umfasst eine innere Elektrode 1 und eine äußere Elektrode 2 die voneinander durch eine Formdichtung 3 und einen Dichtungsträgerkörper 4 getrennt und gegeneinander abgedichtet sind. Die innere Elektrode weist einen Außendurchmesser von beispielsweise etwa 5 mm, und die äußere Elektrode weist in einem ersten axialen Abschnitt 22, in dem die Formdichtung 3 angeordnet ist, einen Innendurchmesser von beispielsweise etwa 14,25 mm auf. Die Elektroden weisen zumindest in dem medienberührenden Endabschnitt vorzugsweise elektropolierte Edelstahloberflächen mit einer Rauhigkeit von nicht mehr als 0,4 mm auf.

Der Dichtungskörper der Formdichtung 3 weist eine innere radiale Dichtfläche 31 auf, die spaltfrei an der inneren Elektrode 1 anliegt, und eine äußere radiale Dichtfläche 32, die spaltfrei an der äußeren Elektrode anliegt. Die Dichtflächen sind durch eine im wesentlichen ebene Deckfläche 33 miteinander verbunden. Die Deckfläche 33 begrenzt die Messkammer des Leitfähigkeitssensors in axialer Richtung. In einer der Deckfläche gegenüberliegenden Basisfläche 34 ist eine sich im Innern des Dichtungskörpers aufweitende Aussparung 36 vorgesehen. Der Dichtungskörper weist ein Perfluor-Polymer, insbesondere EPDM auf.

Der Dichtungsträgerkörper weist einen im wesentlichen zylindrischen Basisabschnitt auf, der durch eine der Formdichtung 3 zugewandte ringförmige Stimfläche 43 begrenz ist. Von der Stimfläche 43 erstreckt sich ein Verankerungsring 44 in axialer Richtung, wobei der Verankerungsring einen zu der Aussparung 36 komplementären Querschnitt aufweist und formschlüssig in diese eingreift, um die Formdichtung 3 in Position zu halten.

Der Dichtungsträgerkörper 4 weist einen formsteifen isolierenden Werkstoff auf, beispielsweise PEEK.

Der Dichtungsträgerkörper 4 weist im Basisabschnitt 41 in einem axialen Abschnitt seiner inneren Mantelfläche eine Gewinde auf, in welches die innere Elektrode 1 nach der Montage der Formdichtung 3 auf dem Dichtungsträgerkörper 4 eingeschraubt ist. Die äußere Elektrode 2 weist ihrer Innenwand einen zweiten axialen Abschnitt 24 auf, der an den ersten axialen Abschnitt 22 angrenzt, und dessen Durchmesser zum ersten axialen Abschnitt hin stetig abnimmt, d.h., der zweite axiale Abschnitt 24 verläuft konisch. Zur Montage wird nun eine vormontierte Baugruppe bestehend aus der Innenelektrode 1, dem Dichtungsträgerkörper 4 und der Formdichtung 3 von einer dem medienseitigen Endabschnitt der zweiten Elektrode 2 abgewandten Endabschnitt in die zweite Elektrode eingebracht, wobei die Formdichtung 3 beim Durchlaufen des zweiten axialen Abschnitts 24 der zweiten Elektrode 2 eine definierte radiale Verpressung erfährt.

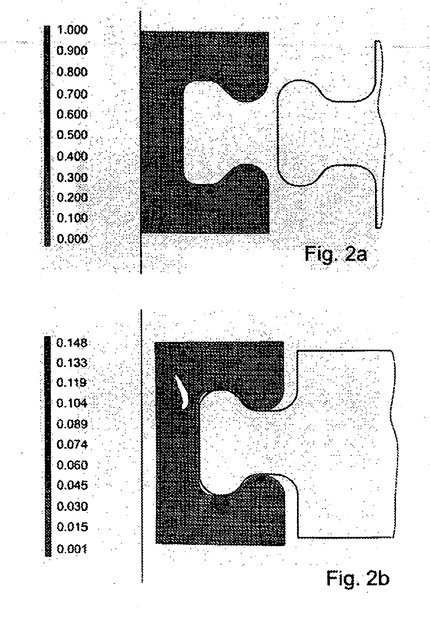

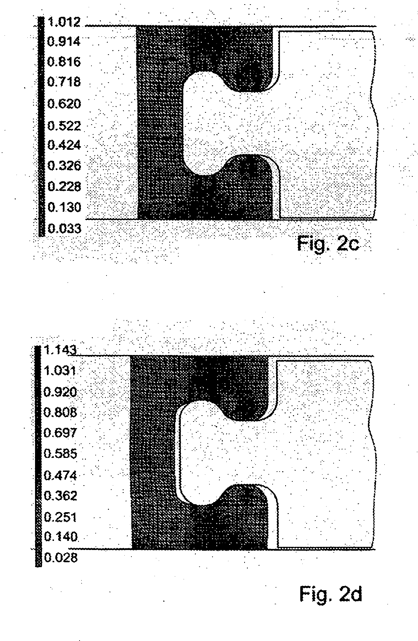

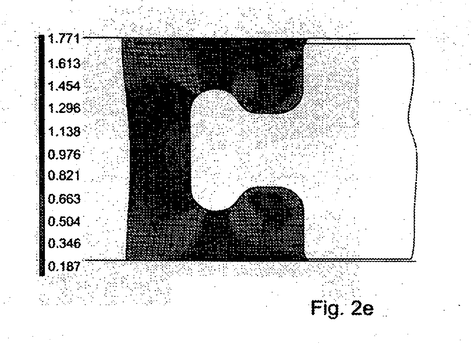

Wie in Fign. 2 a bis e erkennbar, ist die Dichtungsanordnung unter verschiedensten Bedingungen einsetzbar, ohne dass ein Ausfall zu befürchten ist. In den Diagrammen sind steigenden Spannungen mit dunkleren Grautönen dargestellt.

In Fig. 2a ist die unmontierte Formdichtung spannungsfrei mit dem Verankerungsring noch getrennt positioniert dargestellt.

Fig. 2b zeigt die Formdichtung auf dem Verankerungsring, wobei einerseits die radiale Aufweitung der Formdichtung und andererseits die moderaten Spannungsspitzen an den Punkten maximaler Breite des Verankerungsrings zu erkennen sind.

Fign. 2 c bis d zeigen nun die Formdichtung 3 in der radialen Pressung im Ringspalt unter verschiedenen Druck- und Temperaturbedingungen. Dabei ist zu erkennen, dass erstens keine unvertretbaren Spannungsspitzen auftreten, zweitens die Dichtflächen immer vollständig anliegen und drittens die Formdichtung 3 nicht vom Verankerungsring 44 gezogen wird.

Somit erfüllt die Dichtungsanordnung die gestellte Aufgabe, einen verbesserten Dichtring bereitzustellen, der insbesondere für Hygieneanwendungen unter starken Druckschwankungen geeignet ist.

## Patentansprüche

1. Sensor zur Erfassung eines physikalischen oder chemischen Prozessparameters, umfassend
eine Dichtungsanordnung, umfassend eine Formdichtung zur Abdichtung eines Ringspalts zwischen einer äußeren umlaufenden Wand und einer inneren umlaufenden Wand gegen ein Medium, sowie einen Dichtungsträgerkörper (4) mit einem ringförmigen Basisabschnitt (41) und einem Verankerungsring (44) der an einer Stimfläche (43) des Basisabschnitts angeordnet ist, **dadurch gekennzeichnet dass**
die Formdichtung umfasst:
einen elastischen, radial einzuspannenden, ringförmigen Dichtungskörper (3) mit
einer ringförmigen, äußeren radialen Dichtfläche (32) zur Anlage an der äußeren umlaufenden Wand (2),
einer ringförmigen, inneren radialen Dichtfläche (31) zur Anlage an der inneren umlaufenden Wand (1),
einer ringförmigen, medienseitigen Deckfläche (33), welche sich zwischen der äußeren radialen Dichtfläche und der inneren radialen Dichtfläche erstreckt,
einer ringförmigen Basisfläche (34), welche sich auf der der Deckfläche (33) abgewandten Seite zwischen der äußeren Dichtfläche und der inneren Dichtfläche erstreckt, und
mindestens einer ringförmigen Aussparung (36) in der Basisfläche zur Aufnahme eines Verankerungsrings (44), wobei die Aussparung mindestens einen Hinterschnitt aufweist,
wobei eine erste Sensorkomponente die innere Wand einer Ringkammer bildet und eine zweite, koaxial angeordnete Sensorkomponente die äußere Wand der Ringkammer bildet, wobei die Sensorkomponenten durch die Dichtungsanordnung voneinander elektrisch isoliert und zueinander zentriert werden.

2. Sensor nach Anspruch 1, wobei der Dichtungskörper der Formdichtung im nicht montierten Zustand in Gleichgewichtslage einen Querschnitt mit näherungsweise etwa rechteckiger äußerer Kontur aufweist.

3. Sensor nach Anspruch 1 oder 2, wobei die mindestens eine Aussparung im Querschnitt in erster Nährung symmetrisch zum Dichtungskörper angeordnet ist.

4. Sensor nach einem der Ansprüche 1 bis 3, wobei die Aussparung im Querschnitt gerundete Konturen aufweist.

5. Sensor nach Anspruch 4, wobei konkave Oberflächen des Dichtungskörpers innerhalb der Aussparung einen minimalen Krümmungsradius von nicht weniger als 5% und vorzugsweise nicht weniger als 8% der Breite der Querschnittkontur des Dichtungskörpers aufweisen.

6. Sensor nach einem der vorhergehenden Ansprüche, wobei die Oberfläche des Dichtungskörpers im Innem der Aussparung einen konkaven Bereich auf, der zur Öffnung in der Basisfläche hin in einen konvexen Bereich übergeht, wobei dieser Übergang durch einen Wendepunkt oder durch einen Abschnitt mit konstanter Steigung gegeben ist, und die konstante Steigung bzw. die Steigung am Wendepunkt nicht weniger als 30° vorzugsweise nicht weniger als 38° und weiter bevorzugt nicht weniger als 42° beträgt.

7. Sensor nach einem der vorhergehenden Ansprüche, wobei die Oberfläche des Dichtungskörpers im Innem der Aussparung einen konkaven Bereich auf, der zur Öffnung in der Basisfläche hin in einen konvexen Bereich übergeht, wobei dieser Übergang durch einen Wendepunkt oder durch einen Abschnitt mit konstanter Steigung gegeben ist, und die Steigung am Wendepunkt nicht mehr als 60° vorzugsweise nicht mehr als 52° und weiter bevorzugt nicht mehr als 48° beträgt.

8. Sensor nach Anspruch 1, wobei der Dichtungskörper ein Elastomer, insbesondere ein Perfluor-Elastomer, beispielsweise EPDM oder Kalrez aufweist.

9. Sensor nach einem der vorhergehenden Ansprüche, wobei der Verankerungsring (44) formschlüssig in die Hinterschnitte der Aufnahme (36) des Dichtungskörpers (3) eingreift.

10. Sensor nach einem der Ansprüche 1 bis 9, wobei der Verankerungsring so bemessen ist, dass der Querschnitt des Dichtungskörpers aufgeweitet wird, wenn die Aussparung um den Verankerungsring angeordnet ist.

11. Sensor nach einem der Ansprüche 1 bis 9, wobei die radiale Verpressung des Dichtungskörpers etwa 10% bis 25% beträgt, wenn die Dichtungsanordnung bestimmungsgemäß in einem Ringspalt angeordnet ist.

12. Sensor nach einem der Ansprüche 1 bis 11, wobei der Dichtungsträgerkörper (4) ein formsteifes Material aufweist, beispielsweise PEEK.

13. Sensor nach einem der Ansprüche 1 bis 12, wobei zur Vermeidung einer übermäßigen Relativbewegung zwischen der Formdichtung und den anliegenden Dichtflächen einer inneren Wand bzw. einer äußeren Wand der Dichtungsträgerkörper mit einer der Wände oder beiden Wänden fest verbunden ist.

14. Sensor nach einem der Ansprüche 1 bis 13, wobei der Sensor ein Leitfähigkeitssensor ist, und wobei eine erste metallische Elektrode die innere Wand einer Ringkammer bildet und eine zweite, koaxial angeordnete Elektrode die äußere Wand der Ringkammer bildet, und die beiden Elektroden durch die Dichtungsanordnung voneinander elektrisch isoliert und zueinander zentriert werden.

## Claims

1. Sensor for recording a physical or chemical process parameter, comprising:
- a seal arrangement, comprising a molded seal to seal an annular gap, located between an outer circumferential wall and an inner circumferential wall, against a medium, and a seal carrier body (4) with an annular base section (41) and an anchoring ring (44) which is arranged on a face (43) of the base section, **characterized in that**
the molded seal comprises:
an elastic, radially tensioned, annular seal body (3) with
an annular, outer radial sealing surface (32) for resting on the outer circumferential wall (2),
an annular, inner radial sealing surface (32) for resting on the inner circumferential wall (1),
an annular cover surface (33), on medium side, which extends between the outer radial sealing surface and the inner radial sealing surface,
an annular base surface (34) which extends along the side facing away from the cover surface (33) between the outer sealing surface and the inner sealing surface, and
at least one annular recess (36) in the base surface to accommodate an anchoring ring (44) where the recess has at least one undercut
where a first sensor component forms the inner wall of a ring chamber and a second, coaxially arranged sensor component forms the outer wall of the ring chamber, whereby the sensor components are electrically isolated from one another on account of the seal arrangement, and are centered towards one another.

2. Sensor as per Claim 1, where the seal body of the molded seal, when not mounted and when in a balanced state, has a cross-section whose outer contour is approximately rectangular in shape.

3. Sensor as per Claim 1 or 2, where the one recess, at least, is arranged in the cross-section, by first approximation, in a way that is symmetrical to the seal body.

4. Sensor as per one of the Claims 1 to 3, where the recess has round contours in the cross-section.

5. Sensor as per Claim 4, where, within the recess, concave surfaces of the seal body have a minimum radius of curvature of not less than 5%, and preferably not less than 8% of the width of the cross-sectional contour of the seal body.

6. Sensor as per one of the previous claims, where, on the inside of the recess, the surface of the seal body has a concave area which transforms into a convex area towards the opening in the base surface, where this transition is defined by a point of inflection or by a section with a constant gradient, and the constant gradient or the gradient at the point of inflection is not less than 30°, preferably not less than 38° and most preferably not less than 42°.

7. Sensor as per one of the previous claims, where the surface of the seal body, in the inside of the recess, has a concave area which transforms into a convex area towards the opening in the base surface, where this transition is defined by a point of inflection or by a section with a constant gradient, and the gradient at the point of inflection is not more than 60°, preferably not more than 52°, and most preferably not more than 48°.

8. Sensor as per Claim 1, where the seal body consists of an elastomer, particularly a perfluoroelastomer, such as EPDM or Kalrez.

9. Sensor as per one of the previous claims, where the anchoring ring (44) engages with positive locking in the undercuts of the recess (36) of the seal body (3).

10. Sensor as per one of the Claims 1 to 9, where the dimensions of the anchoring ring are such that the cross-section of the seal body is extended if the recess is arranged around the anchoring ring.

11. Sensor as per one of the Claims 1 to 9, where the radial pressure of the seal body is between 10% and 25% when the seal arrangement is correctly placed in an annular gap.

12. Sensor as per one of the Claims 1 to 11, where the seal carrier body (4) comprises a material which cannot be deformed, such as PEEK.

13. Sensor as per one of the Claims 1 to 12, where, in order to avoid excessive relative movement between the molded seal and the adjacent sealing surfaces of an inner wall or of an outer wall, the seal carrier body is permanently connected to one of the walls, or both walls.

14. Sensor as per one of the Claims 1 to 13, where the sensor is a conductivity sensor, and where a first metal electrode forms the inner wall of a ring chamber, and a second, coaxially arranged electrode forms the outer wall of the ring chamber, and the seal arrangement causes the two electrodes to be electrically isolated from one another and centered towards one another.

## Revendications

1. Capteur destiné à l'acquisition d'un paramètre de process physique ou chimique, comprenant
un dispositif d'étanchéité, comprenant un joint profilé destiné à rendre étanche une fente annulaire entre une paroi extérieure et une paroi intérieure par rapport à un produit, ainsi qu'un corps-support d'étanchéité joint (4) avec une partie de base (41) annulaire et une bague d'ancrage (44), qui est disposé sur une surface frontale (43) de la partie de base, **caractérisé en ce que**
le joint profilé comprend :
un corps d'étanchéité (3) élastique, à serrage radial, annulaire avec
une surface d'étanchéité (32) radiale extérieure, annulaire, en guise de butée contre la paroi extérieure (2),
une surface d'étanchéité (31) radiale intérieure, annulaire, en guise de butée contre la paroi intérieure (1),
une surface de couverture (33) côté produit, annulaire, laquelle s'étend entre la surface d'étanchéité radiale extérieure et la surface d'étanchéité radiale intérieure,
une surface de base (34) annulaire, laquelle s'étend du côté opposé à la surface de couverture (33) entre la surface d'étanchéité extérieure et la surface d'étanchéité intérieure, et
au moins un évidement (36) annulaire dans la surface de base, destiné au logement d'une bague d'ancrage (44), l'évidement présentant au moins une contre-dépouille,
pour lequel un premier composant de capteur forme la paroi intérieure d'une chambre annulaire et un deuxième composant de capteur forme la paroi extérieure de la chambre annulaire, pour lequel les composants de capteur sont isolés électriquement et centrés l'un par rapport à l'autre au moyen d'un dispositif d'étanchéité.

2. Capteur selon la revendication 1, pour lequel le corps d'étanchéité du joint profilé à l'état non monté, en position d'équilibre, présente une section avec un contour extérieur approximativement rectangulaire.

3. Capteur selon la revendication 1 ou 2, pour lequel l'au moins un évidement est disposé dans la section, en première approximation de façon symétrique par rapport au corps d'étanchéité.

4. Capteur selon l'unes des revendications 1 à 3, pour lequel l'évidement dans la section présente des contours arrondis.

5. Capteur selon la revendication 4, pour lequel les surfaces concaves du corps d'étanchéité à l'intérieur de l'évidement présentent un rayon de courbure minimal d'au moins 5 %, et de préférence d'au moins 8 % de la largeur du contour de section du corps d'étanchéité.

6. Capteur selon l'une des revendications précédentes, pour lequel la surface du corps d'étanchéité à l'intérieur de l'évidement présente une zone concave, qui s'étend vers l'ouverture dans la surface de base pour se transformer en une zone convexe, ce changement étant défini par un point d'inflexion ou par une section avec un gradient constant, et le gradient constant ou le gradient au niveau du point d'inflexion s'élevant à au moins 30°, de préférence à au moins 38° et particulièrement de préférence à au moins 42°.

7. Capteur selon l'une des revendications précédentes, pour lequel la surface du corps d'étanchéité à l'intérieur de l'évidement présente une zone concave, qui s'étend vers l'ouverture dans la surface de base pour se transformer en une zone convexe, ce changement étant défini par un point d'inflexion ou par une section avec un gradient constant, et le gradient au niveau du point d'inflexion s'élevant à un maximum de 60°, de préférence à un maximum de 52° et particulièrement de préférence à un maximum de 48°.

8. Capteur selon la revendication 1, pour lequel le corps d'étanchéité est constitué d'un élastomère, notamment un élastomère perfluorique, par exemple EPDM ou Kairez®.

9. Capteur selon l'une des revendications précédentes, pour lequel la bague d'ancrage (44) s'engage parfaitement dans les contre-dépouilles du logement (36) du corps d'étanchéité (3).

10. Capteur selon l'une des revendications 1 à 9, pour lequel la bague d'étanchéité est dimensionnée de telle manière que la section du corps d'étanchéité est évasée lorsque l'évidement est disposé autour de la bague d'ancrage.

11. Capteur selon l'une des revendications 1 à 9, pour lequel la compression radiale du corps d'étanchéité s'élève env. entre 10 et 25 % lorsque le dispositif d'étanchéité est disposé conformément aux prescriptions dans une fente annulaire.

12. Capteur selon l'une des revendications 1 à 11, pour lequel le corps-support d'étanchéité (4) est constitué d'un matériau indéformable, par exemple en PEEK.

13. Capteur selon l'une des revendications 1 à 12, pour lequel le corps-support d'étanchéité est relié à demeure avec l'une ou les deux parois afin d'éviter un mouvement relatif excessif entre le joint profilé et les surfaces d'étanchéité adjacentes d'une paroi intérieure ou d'une paroi extérieure.

14. Capteur selon l'une des revendications 1 à 13, pour lequel le capteur est un capteur de conductivité, et pour lequel une première électrode métallique forme la paroi intérieure d'une chambre annulaire et une deuxième électrode, disposée coaxialement, forme la paroi extérieure de la chambre annulaire, et les deux électrodes sont isolées électriquement et centrées l'une par rapport à l'autre au moyen d'un dispositif d'étanchéité.
